## Europäisches Patentamt

## European Patent Office

## Office européen des brevets

(19)

(11) Veröffentlichungsnummer: **0 175 795**
**B1**

(12) # EUROPÄISCHE PATENTSCHRIFT

(45) Veröffentlichungstag der Patentschrift:
**20.07.88**

(21) Anmeldenummer: **84111317.8**

(22) Anmeldetag: **22.09.84**

(51) Int. Cl.⁴: **B 31 F 5/04**, B 32 B 31/04

(54) **Kaschierstation.**

(43) Veröffentlichungstag der Anmeldung:
**02.04.86 Patentblatt 86/14**

(45) Bekanntmachung des Hinweises auf die Patenterteilung:
**20.07.88 Patentblatt 88/29**

(84) Benannte Vertragsstaaten:
**AT CH FR GB IT LI NL**

(56) Entgegenhaltungen:
**DE-A-1 511 291**
**DE-C-3 315 815**
**US-A-1 669 488**
**US-A-4 025 380**

(73) Patentinhaber: **Tünkers Maschinenbau GmbH, Am Rosenkothen 8, D-4030 Ratingen 1 (DE)**

(72) Erfinder: **Völbel, Klaus- Dieter, Oberkasseler Strasse 79, D-4000 Düsseldorf 11 (DE)**
Erfinder: **Trosdorff, Willi, Nettetalstrasse 14, D-4000 Düsseldorf 12 (DE)**

(74) Vertreter: **Beyer, Rudi, Gneisenaustrasse 1, D-4030 Ratingen 6 (Hösel) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Verfahren zum Kaschieren von Bogen auf Bogen, von denen mindestens einer einseitig mit Klebstoff versehen und der andere Bogen auf diesem kaschiert wird, und die Vorlaufkanten der Bogen erst nach einer gewissen Abbindezeit des aufgetragenen Klebstoffes berührungslos übereinander hereingeführt, gegen einen auf die Vorlaufkanten der Bogen einwirkenden Anschlag gebracht, ausgerichtet und festgehalten und der Anschlag wegbewegt wird und mindestens einem der Bogen eine quer zu seiner Vorlaufrichtung gerichtete Bewegung erteilt wird, derart, daß die Bogen im Bereich ihrer Vorlaufkanten zusammengebracht und danach aufeinanderkaschiert und wegtransportiert werden.

Des weiteren betrifft die Erfindung eine Kaschiervorrichtung zum Durchführen des erfindungsgemäßen Verfahrens.

Ein Verfahren und eine Vorrichtung gemäß der Gattung gehören durch die DE-OS-1 511 291 zum Stand der Technik. Nachteilig ist hierbei, daß in der ausgerichteten Stellung die aufeinander zu kaschierenden Bogen mit ihren Vorlaufkanten über ihre Förderbahnen randseitig gegen den Anschlag überstehen. Es liegt somit ein Freiraum zwischen den übereinander befindlichen Förderbahnen und dem Anschlag vor. Dadurch kann es, insbesondere bei labilem Papier, zu Faltenbildung, Verwerfungen, mithin zu Störungen und Betriebsunterbrechungen kommen.

Der Erfindung liegt die Aufgabe zugrunde, ein Verfahren gemäß dem Gattungsbegriff des Patentanspruches 1 so auszugestalten, daß sich zwei oder mehr Bogen plan, d. h. ohne Falten und Blasen sowie passgerecht, d. h. Kante auf Kante, berührungslos gegeneinander ausrichten lassen, ohne daß selbst bei labilem Papier die Gefahr von Betriebsstörungen besteht.

Des weiteren liegt der Erfindung die Aufgabe zugrunde, eine vorteilhafte Kaschiervorrichtung zum Durchführen des erfindungsgemäß angestrebten Verfahrens zu schaffen.

Diese Aufgabe wird durch die kennzeichnenden Merkmale des Patentanspruches 1 gelöst.

Bei Anwendung des erfindungsgemäßen Verfahrens werden die Bogen bis unmittelbar in der Ebene des Anschlages unterfangen und geführt, so daß selbst labile Bogen nicht mehr im Bereich ihrer Vorlaufkanten abknicken können. Infolgedessen sind Betriebsstörungen nicht mehr zu befürchten. Vielmehr lassen sich bei Anwendung des erfindungsgemäßen Verfahrens auch labile Papierbogen plan und passgerecht aufeinanderkaschieren.

Diese Aufgabe wird durch die Merkmale des Patentanspruches 2 gelöst.

Bei der erfindungsgemäßen Kaschiervorrichtung ist der in Vorlaufrichtung vornliegende Förderbahnteil wegbeweglich ausgebildet. Infolgedessen läßt sich dieser Teil bis unmittelbar gegen den Anschlag bringen, so daß der von oben kommende Bogen bis zur Berührung des Anschlages von diesem Förderbahnteil geführt und unterfangen werden kann. Erst wenn der Zeitpunkt gekommen ist, daß die Bogen aufeinanderkaschiert werden sollen, kann dieser Förderbahnteil wegbewegt werden, woraufhin eine senkrecht bewegliche Taktwalze den oberen Bogen gegen den mit Leim bestrichenen unteren Bogen randseitig andrückt und dann die Aufeinanderkaschierung der Bogen und deren Wegtransport erfolgt.

In Patentanspruch 3 ist eine weitere vorteilhafte Ausführungsform der erfindungsgemäßen Kaschiervorrichtung beschrieben. Bei dieser erfolgt die Heranförderung des oberen, nicht mit Leim bestrichenen Bogens unter spitzem Winkel gegen die Förderbahn des unteren, obenseitig mit Leim bestrichenen Bogen. Erst in einem geringen Abstand vor dem Anschlag erfolgt die randseitige Umlenkung des Bogens in die Horizontale, so daß beim Wegbewegen des beweglichen Förderbahnteils randseitig ein Oberflächenabschnitt zur Verfügung steht, der von der Taktwalze unmittelbar passergerecht gegen den unteren mit Leim versehenen Bogen angedrückt werden kann.

In der Zeichnung ist die Erfindung - teils schematischan einem Ausführungsbeispiel veranschaulicht. Es zeigen:

Fig. 1 eine Kaschiervorrichtung gemäß der Erfindung in der Seitenansicht;

Fig. 2 eine ausschnittsweise Darstellung aus Fig. 1 in größerem Maßstab und

Fig 3 eine Draufsicht auf das Transportband gemäß Fig. 2.

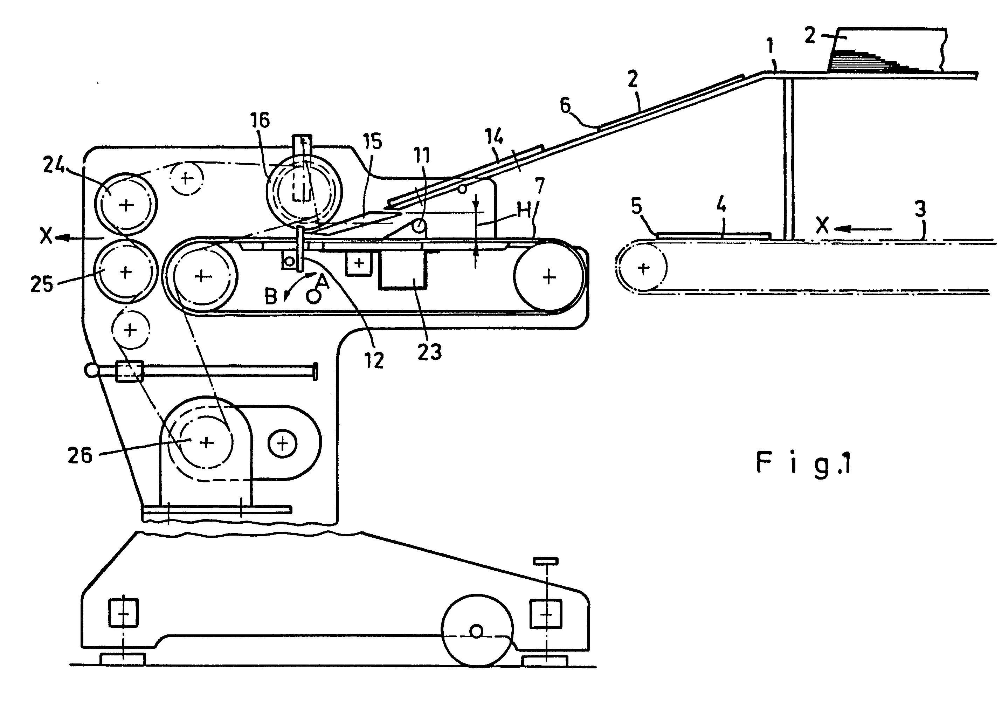

Die aus Fig. 1 ersichtliche Kaschierstation weist einen abnehmbaren Anlegetisch 1 auf, auf dessen horizontalem Teil ein Stapel Bogen 2 angeordnet ist. Unterhalb dieses Stapels Bogen 2 ist eine Fördervorrichtung 3 angeordnet, deren Förderrichtung mit X bezeichnet ist und auf der die in der Regel stärkeren Bogen 4 herangefördert werden, die in einem nicht dargestellten Leimwerk an ihrer Oberseite mit einem möglichst dünnen Klebstoffauftrag versehen worden sind. Der beleimte Bogen 4 hat eine Vorlaufkante 5. Die Vorlaufkante des oberen Bogens 2 ist mit dem Bezugszeichen 6 bezeichnet.

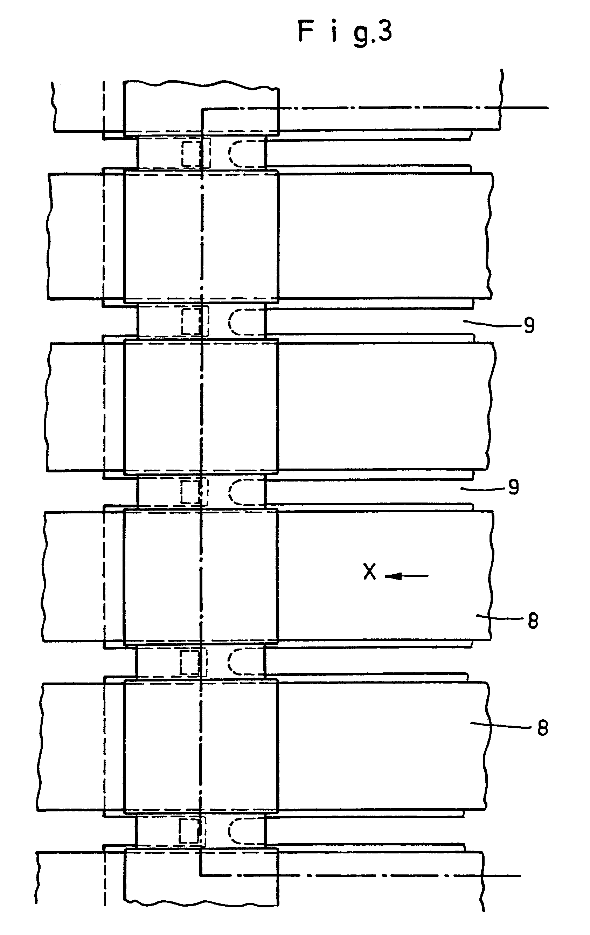

Der beleimte Bogen 4 gelangt über die genügend lange Förderbahn der Fördervorrichtung 3, die aus endlosen Förderbändern besteht, zu einer waagerechten Förderbahn 7, die mit Abstand sowie parallel zueinander verlaufende endlose riemenförmige Förderbänder 8 aufweist (Fig. 3). Der zwischen diesen Förderbändern 8 bestehende Raum ist mit dem Bezugszeichen 9 bezeichnet (Fig. 3).

Die unteren Bogen 4 gelangen in den Bereich einer Seitenausrichtvorrichtung 11 eines Bogentisches 10, die aus mindestens einer aus der Förderbahn 7 nach oben herausragenden Anschlagschiene besteht, die die unteren Bogen 4 quer ausrichtet. Bei ihrem Weitertransport durch die Förderbänder 8 stoßen die unteren Bogen 4 mit ihrer Vorlaufkante 5 gegen einen aus der Förderbahn 7 nach oben herausragenden Anschlag 12, der in Richtung A und B motorisch hin- und herbeweglich ist, derart, daß er aus der Förderbahn 7 wegbewegt werden kann.

Die unter einem spitzen Winkel zur Förderbahn 7 nach unten geneigte Förderbahn 13 für die oberen Bogen 2 endet im Höhenbereich H oberhalb der Förderbahn 7 für die unteren Bogen 6. In ihrem Endbereich ist die Förderbahn 13 ebenfalls mit einer Seitenausrichtvorrichtung 14 zum Querausrichten der oberen Bogen 2 versehen.

An die Förderbahn 13 schließt sich ein nachfolgend als Trennkeil bezeichneter, beweglicher Förderbahnteil 15 an, der mit gleicher Neigung und in gleicher Ebene wie die Förderbahn 13 verläuft, so daß die Bogen 2 knickfrei und stets an ihrer unteren Seite unterfangen weitergefördert werden, bis sie mit ihrer Vorlaufkante 6 ebenfalls oberhalb der unteren Bogen 4 gegen den Anschlag 12 anstoßen. Der Transport auf der Förderbahn 13 kann durch einen Friktionsförderer erfolgen.

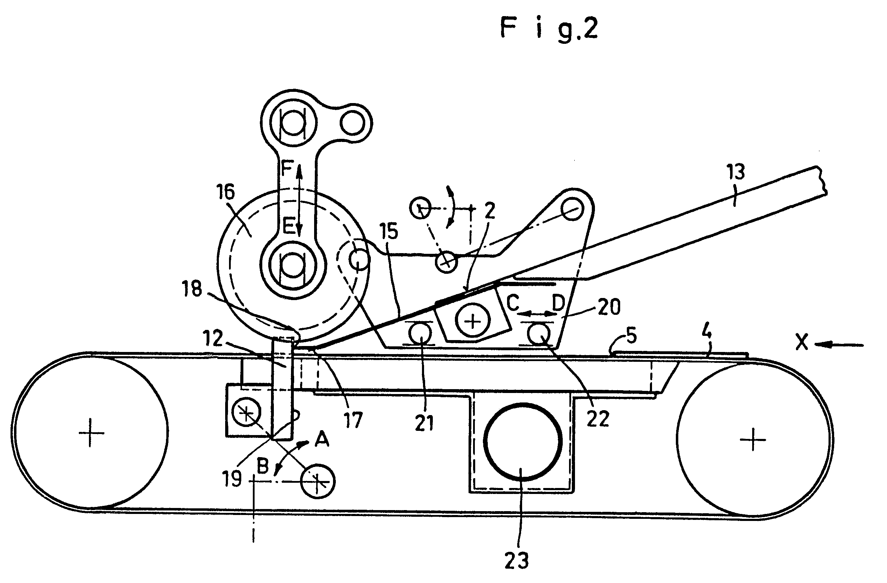

Wie insbesondere die Fig. 2 erkennen läßt, verläuft die Förderbahn des Trennkeils 15 bis annähernd in den Bereich des Anschlages 12 unter dem gleichen spitzen Winkel wie die Förderbahn 13. Erst in einem relativ geringen Abstand, und zwar schon unterhalb einer Taktwalze 16, ist die Förderbahn des Trennkeils 15 in die Horizontale abgewinkelt - bei 17 - und stößt vorzugsweise mit seiner Vorderkante 18 (Fig. 2) gegen die Anschlagfläche 19 des Anschlages 12, so daß der obere Bogen 2 bis in die Ebene der Anschlagfläche 19 durch den Trennkeil 15 unterfangen und geführt ist.

Der Trennkeil 15 weist ein Führungsteil 20 (Fig. 2) auf, das über Führungen 21 und 22 in Richtung C bzw. D, also horizontal, geführt angeordnet ist. Auf diese Weise ist es möglich, den Trennkeil 15 um ein begrenztes Maß in Richtung D von der Anschlagfläche 19 wegzubewegen, woraufhin die Vorlaufkanten 5 und 6 von Unterbogen 4 bzw. Oberbogen 2 passergerecht und plan aufeinandergebracht werden können. Man erkennt somit deutlich, daß auch bei labilem Papier ein Abknicken des oberen Bogens 2 nicht möglich ist.

Die Taktwalze 16 ist in Richtung E bzw. F motorisch hin- und herbeweglich angetrieben.

Nach dem Querausrichten des unteren Bogens 4 durch die Seitenausrichtvorrichtung 11 und nach dem Vorlauf dieses Bogens 4 mit seiner Vorlaufkante 5 gegen die Anschlagflächen 19 wird der Bogen 4 durch an einen Saugkasten 23 angelegtes Vakuum auf den Förderbändern 8 gehalten. Dieses Vakuum kann durch die Räume 9 zwischen den Förderbändern 8 gegen die Unterseite des Bogens 4 wirksam werden.

Nachdem die Vorlaufkanten 5 und 6 an der Anschlagfläche 19 übereinander gebracht worden sind, wird der Trennkeil 15 in Richtung D wegbewegt. Gleichzeitig oder kurze Zeit danach wird die Taktwalze 16 in Richtung E angetrieben und drückt den oberen Bogen 2 passergerecht und plan gegen den unteren Bogen 4, woraufhin das Aufeinanderkaschieren der Bogen 2 und 4 erfolgt. Diese bewegen sich dabei in Richtung X durch die Kaschiervorrichtung und durch die motorisch angetriebenen Andruckwalzen 24 und 25 hindurch, die über einen regelbaren Antrieb 26 motorisch angetrieben sind.

Damit die Bogen 2 und 4 in Richtung X weggefördert und aufeinanderkaschiert werden können, wird während oder gleichzeitig mit dem Herabbewegen der Taktwalze 16 auch der Anschlag 12 in Richtung B motorisch weggeschwenkt.

Nach dem Wegfördern der aufeinanderkaschierten Bogen wird die Taktwalze 16 in Richtung F in ihre Ausgangslage (Fig. 2) zurückbewegt. Außerdem gelangt der Trennkeil 15 durch eine Bewegung in Richtung C wieder in seine aus Fig. 2 ersichtliche Ausgangslage. Des weiteren schwenkt der Anschlag 12 in Richtung A in seine ebenfalls aus Fig. 2 ersichtliche Anschlagstellung zurück, woraufhin sich das Arbeitsspiel wiederholt.

## Patentansprüche

1. Verfahren zum Kaschieren von Bogen (2) auf Bogen (4), von denen mindestens einer (z. B. 4) einseitig mit Klebstoff versehen und der andere Bogen (2) auf diesem kaschiert und die Vorlaufkanten (5, 18) der Bogen (2, 4) erst nach einer gewissen Abbindezeit des aufgebrachten Klebstoffes berührungslos übereinander herangefördert, gegen einen auf die Vorlaufkanten (5, 18) der Bogen (2, 4) einwirkenden Anschlag (12) ausgerichtet und festgehalten werden und danach mindestens einem der Bogen (z. B. 2) eine quer zu seiner Vorlaufrichtung gerichtete Bewegung erteilt wird, derart, daß die Bogen (2, 4) im Bereich ihrer Vorlaufkanten (5, 18) zusammengebracht und der Anschlag (12) aus der Bewegungsbahn der Bogen (2, 4) entfernt wird und danach die Bogen (2, 4) aufeinander kaschiert und wegtransportiert werden, dadurch gekennzeichnet, daß die Bogen (2, 4) bis zur Anschlagebene (19) gegen die Vorlaufkanten (5, 6) einwirkenden Anschlages (12) unterfangen und geführt werden und der obere Bogen (2) nach Erreichen des Anschlages (12) nicht weiter unterfangen wird.

2. Kaschiervorrichtung zum Durchführen des Verfahrens nach Anspruch 1, mit mindestens zwei Förderbahnen (7, 13), die übereinander die zu kaschierenden Bogen (2, 4) gegen einen Anschlag (12) heranfördern, wobei die Bewegungsbahnen unter einem spitzen Winkel zueinander verlaufen, dadurch gekennzeichnet, daß die obere Förderbahn (13) mehrteilig ausgeführt ist, wobei der in Förderrichtung (X) des unteren Bogens (4) vornliegende Förderbahnteil (15) bis gegen den Anschlag (12) reicht und gegen die Förderrichtung (X) um ein begrenztes Maß gegen den anderen Förderbahnteil (7) der oberen Förderbahn (13) hin- und herbewegbar ist.

3. Kaschiervorrichtung nach Anspruch 2, dadurch gekennzeichnet, daß die Förderbahn des beweglichen Förderbahnteils (15) über den größten Teil ihrer mit dem Bogen (2) in Berührungskontakt kommenden Länge in der Ebene des feststehenden Förderbahnteils (13) verläuft und erst kurz vor dem Anschlag (12) in die Waagerechte abbiegt.

**Claims**

1. Process for placing sheet (2) on sheet (4), at least one of which (e. g. 4) is provided with adhesive on one side, and the other sheet (2) is applied thereto and only after the applied adhesive has been allowed to set for a certain time are the advancing edges (5, 18) of the sheets (2, 4) conveyed above one another without touching, aligned and held in place against a stop (12) acting on the advancing edges (5, 18) of the sheets (2, 4) and then at least one of the sheets (e. g. 2) is moved transverse to its direction of advance so that the sheets (2, 4) are brought together in the region of their advancing edges (5, 18) and the stop (12) is moved out of the path of travel of the sheets (2, 4) and then the sheets (2, 4) are placed one on top of the other and transported away, characterised in that the sheets (2, 4) are held from beneath and guided until they reach the plane of abutment (19) against the stop (12) acting on the advancing edges (5, 6) and after reaching the stop (12) the top sheet (2) is no longer held from beneath.

2. Laminating apparatus for carrying out the process according to claim 1, having at least two conveyor belts (7, 13) which convey the sheets (2, 4) for lamination one above the other to a stop (12), the paths of travel extending at an acute angle to each other, characterised in that the upper conveyor belt (13) is of sectional construction, the front section (15) of the conveyor belt, in the direction of travel (X) of the bottom sheet (4), extending up to the stop (12) and being movable back and forth relative to the direction of travel (X) by a limited amount relative to the other section (7) of the upper conveyor belt (13).

3. Laminating apparatus according to claim 2, characterised in that the conveying path of the movable conveyor belt section (15) extends in the plane of the fixed section (13) over the majority of its length which comes into contact with the sheet (2) and only deflects into a horizontal position just before the stop (12).

**Revendications**

1. Procédé pour contre-coller une feuille (4) sur une autre (2), l'une au moins de ces feuilles (4 par exemple) étant munie de colle sur un côté et l'autre (2) étant contre-collée sur celle-ci, où l'on fait arriver les bords avant (5, 18) des feuilles (2, 4) l'un au-dessus de l'autre sans contact, mais seulement après une certaine durée de prise de la colle qui a été appliquée, on les aligne et on les maintient contre une butée (12) agissant sur les bords avant (5, 18) des feuilles (2, 4), et l'on impartit ensuite à l'une au moins des feuilles (par exemple 2) un mouvement dirigé perpendiculairement à sa direction d'avancement, de telle sorte que les feuilles (2, 4) soient réunies dans la région de leurs bords avant (5, 18), la butée (12) étant effacée de la surface transporteuse des feuilles (2, 4), et les feuilles (2, 4) étant ensuite contre-collées et évacuées, caractérisé par le fait que les feuilles (2, 4) sont soutenues et guidées jusqu'au plan de butée (19) de la butée (12) agissant sur les bords avant (5, 6), et que la feuille supérieure (2) ne continue pas à être soutenue après avoir atteint la butée (12).

2. Dispositif de contre-collage pour la mise en oeuvre du procédé selon la revendication 1, comprenant au moins deux surfaces transporteuses (7, 13) qui amènent l'une au-dessus de l'autre contre une butée (12) les feuilles à contre-coller (2, 4) les surfaces transporteuses s'étendant sous un angle aigu l'une par rapport à l'autre, caractérisé par le fait que la surface transporteuse supérieure (13) est réalisée en plusieurs parties, la partie (15) de la surface transporteuse qui est située en aval dans la direction (X) du déplacement de la feuille inférieure (4) arrivant jusqu'à la butée (12) et pouvant être déplacée dans les deux sens d'une distance limitée dans la direction de déplacement (X) par rapport à l'autre partie de la surface transporteuse supérieure (13).

3. Dispositif de contre-collage selon la revendication 2, caractérisé par le fait que la surface transporteuse de la partie mobile (15) de la surface transporteuse s'étend, sur la plus grande partie de sa longueur en contact avec la feuille (2), dans le plan de la partie fixe (13) de la surface transporteuse et n'est déviée vers l'horizontale que peu avant la butée (12).

Fig.1

F i g.2

0 175 795

# F i g.3